# EUROPEAN PATENT APPLICATION

(11) **EP 3 474 246 A1**
(43) Date of publication of application: **24.04.2019**
(21) Application number: 18200157.8
(22) Date of filing: 12.10.2018
(51) Int. Cl.: G07F 11/44, G07F 13/00

(54) **AUTOMATIC DISPENSER OF FOOD PRODUCTS, PARTICULARLY FOR DISPENSING FOOD TOPPINGS**

(30) Priority: 17.10.2017 IT 201700116736
(71) Applicant: Bianchi Industry S.p.a., Frazione Zingonia (IT)
(72) Inventor: ZAVATTI, Marco, 24040 CASTEL ROZZONE BG (IT)
(74) Representative: Modiano, Micaela Nadia

(57) **Abstract**

A dispenser of food products (10), particularly for dispensing food toppings, which comprises: a container (20) adapted to contain a reserve of products; a dispenser body (30), connected to the container (20), which comprises a cavity (31), a separator element (32) which divides the cavity (31) into an upper chamber (31a) and a lower chamber (31b), and a dispensing port (33) for the outflow of the products from the lower chamber (31b); the upper chamber (31a) being connected to the container (20) by way of at least one window (21) for the passage of the products; an agitator element (40), which is arranged inside the upper chamber (31a) and is adjacent to the separator element (32); a motor device (51) which transmits motion to the agitator element (40) by way of a transmission system (60); the dispenser comprises at least one spacer element (70) interposed between the agitator element (40) and the separator element (32).

## Description

The present invention relates to a dispenser of food products, particularly for dispensing food toppings, which is useful and practical in the field of catering and of vending machines.

In the field of catering, the term "topping" in general means the ingredients placed on a food product, in the final step of preparation, totally or partially covering it.

The toppings can be hot or cold, and the texture can be liquid, semiliquid, in powder form or in granular form. Furthermore, there are toppings both for beverages and for solid foods.

Of particular interest for the present invention are solid toppings in granular or powder form or small fruits or whole candies, used in particular to garnish ice creams and sweet or savory beverages.

Examples of granular toppings are represented by chopped nuts or pulverized biscuits, assorted sweetmeats, sugar sprinkles, chocolate in flakes, cereals, croutons etc..

An example of a topping in powder form is represented by cocoa powder or cinnamon powder.

There are also toppings that consist of small whole fruits such as for example raisins.

A peculiar characteristic of toppings is represented by the fact that they have to be placed on top of the food or beverage immediately before it is consumed. Furthermore, in order to guarantee the quality of the product it is necessary that the quantity of topping is adequate, neither too much nor too little, and this objective is not always easy to achieve manually.

For these reasons, over time topping dispensers have been developed with the purpose of rapidly dispensing the right dose of topping.

Manual topping dispensers, in which the topping is dispensed by way of a mechanical device actuated by an operator, and electronically-controlled automatic dispensers, to which reference is made in the present description, already exist in the state of the art.

Among automatic dispensers, of particular importance are the dispensers installed in vending machines for foods, in particular beverages and ice-creams, in which the end consumer selects the desired topping that will be dispensed by the automatic dispenser.

According to the prior art, automatic dispensers usually comprise a container (or cartridges) which is filled with the desired topping and a dispenser body, provided with a dispensing port, which controls the outflow of the topping from the container and which is positioned below the container, at a window, so that the force of gravity contributes to the outflow of the topping from the dispensing port.

Generally the dispenser body comprises a closure element, such as a valve, a gearwheel, or a diaphragm, that is electronically controlled, which regulates the outflow of the topping.

Also according to the prior art, in order to allow the outflow of the proper quantity of topping, the dispenser body has a dispensing chamber that is dimensioned to contain the proper quantity of topping.

Since the toppings often have a texture (for example granular) that hampers the drop by gravity and favors the creation of accumulated lumps or caking, the problem arises of facilitating a correct and uniform outflow of the topping. In order to overcome this problem, the dispensers according to the prior art often have an agitator element, which is typically constituted by a rotating element, such as a screw feeder or the like.

These conventional dispensers, although very useful, are not devoid of drawbacks.

In fact, the agitator element, by rotating, crushes the product to be dispensed, acting as a grinder and degrading it.

Another disadvantage of conventional dispensers resides in the fact that they are not very versatile, in that the dimensions of the components, such as the dispensing chamber and the agitator element, which are suitable for a certain product, are not so for others.

Another disadvantage of conventional dispensers resides in the fact that cleaning and maintenance are complicated, as is the disassembly of the various parts.

The aim of the present invention is to overcome the above mentioned drawbacks of the prior art, by devising an automatic dispenser of food products, particularly for dispensing food toppings, that avoids degrading the products during the dispensing.

Within this aim, an object of the present invention is to provide a dispenser that is highly versatile and adapted to dispense different types of product.

Another object of the invention consists in providing a system that is capable of dispensing a variable number of products.

Another object of the invention consists in devising a dispenser that is easy to clean and maintain.

Another object of the invention consists in providing a dispenser that is easy to implement and economically competitive when compared to the prior art.

This aim and these and other objects which will become better apparent hereinafter are achieved by a dispenser according to claim 1.

This aim and these and other objects are also achieved by a modular system according to claim 11 as well as by a distributor of food products according to claim 12.

Further characteristics and advantages of the invention will become better apparent from the detailed description of a preferred, but not exclusive, embodiment of an automatic dispenser of food products, particularly for dispensing food toppings, according to the invention, illustrated by way of non-limiting example with the aid of the accompanying drawings wherein:
Figure 1 is an exploded view of the dispenser body of a dispenser according to the invention, in a first possible embodiment;
Figures 2 and 3 are perspective views of the dispenser body of Figure 1;
Figure 4 is a detail of the dispenser body of Figure 1;
Figure 5 is an exploded view of the dispenser body of a dispenser according to the invention, in a second possible embodiment;
Figure 6 is an exploded view of some elements of the dispenser body of a dispenser according to the invention, in a third possible embodiment;
Figures 7 and 8 are perspective views of a possible embodiment of the container, according to the invention;
Figure 9 is a detail of the closure element in the release position;
Figure 10 is a detail of the closure element in the closed position;

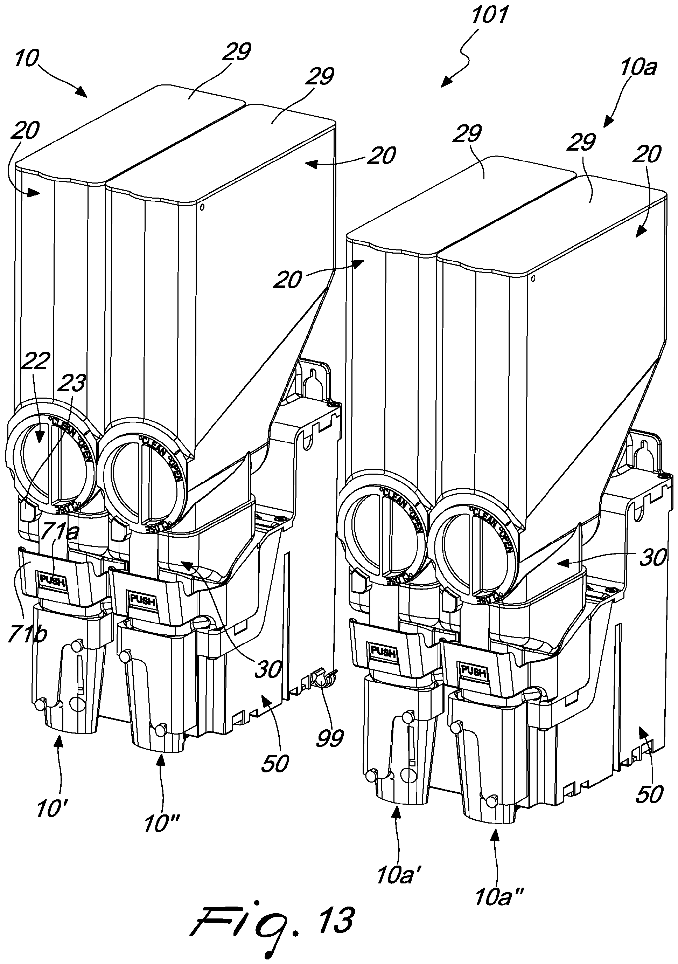

Figures 11, 12 and 13 are perspective views of a modular system of dispensers according to the invention;
Figure 14 is a plan view of a possible embodiment of a modular system of dispensers according to the invention;
Figure 15 is a front elevation view of a dispenser according to the invention;
Figure 16 is a cross-sectional view taken along the plane XVI of the dispenser of Figure 15;
Figure 17 is an exploded view of the dispenser of Figure 15.

With reference to the figures, the dispenser of food products, generally designated with the reference numeral 10, comprises a container 20 adapted to contain a reserve of products and a dispenser body 30, which is connected to such container 20.

The container 20 can have any shape and preferably has the form of a hopper with one or more of the vertical walls inclined in the manner of a chute in order to facilitate the flow of the products toward the dispenser body, and it is provided with a removable lid 29 on the upper part.

In the non-limiting examples shown, the container has the form of a hexahedron with two parallelepiped faces, and is positioned in such a way that one wall 28 is inclined in the manner of a chute.

In other embodiments, not shown, the container can be frustum-shaped or parallelepiped-shaped.

The dispenser body 30 comprises a cavity 31, a separator element 32 which divides such cavity 31 into an upper chamber 31a and a lower chamber 31b, and a dispensing port 33 for the outflow of the products.

Preferably, the dispensing port is coupled to a dispensing spout 331 which effectively extends the dispensing port 33 in order to convey the dispensed products onto the food or the beverage to be garnished with topping.

The separator element 32 is constituted for example by a plate or a diaphragm or the like, which comprises at least one opening 34 which connects the upper chamber 31a with the lower chamber 31b.

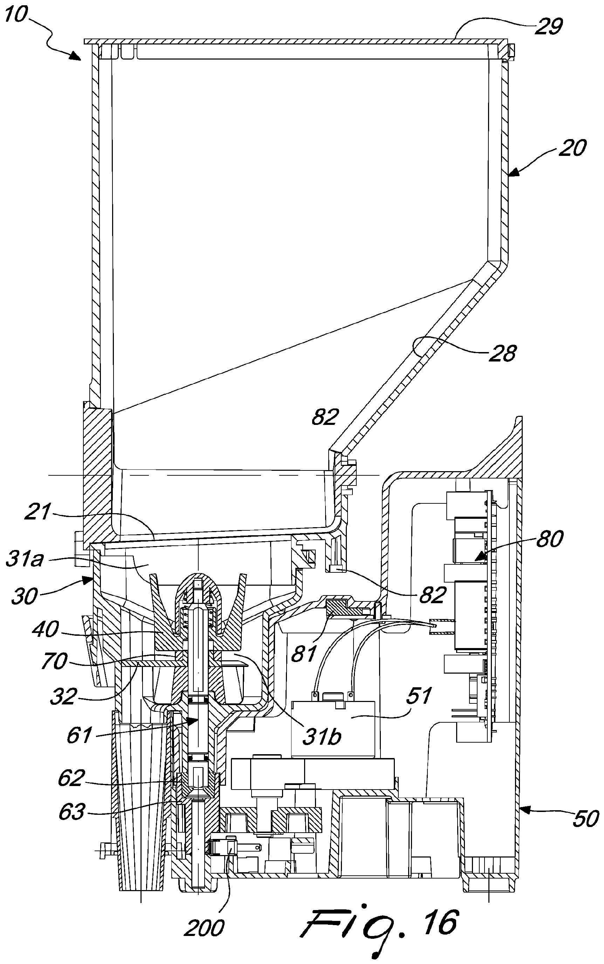

As illustrated in particular in Figure 16, the upper chamber 31a of the dispenser body 30 is connected to the container 20 by way of at least one window 21 for the passage of products.

In other words, in the lower wall of the container 20 there is at least one window 21 which allows the passage of the products from the container 20 to the dispenser body 30 on which the container 20 is placed.

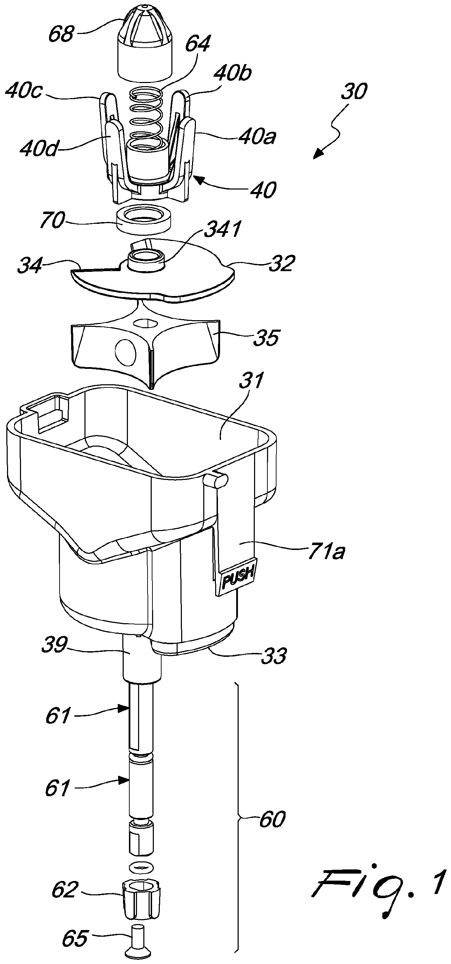

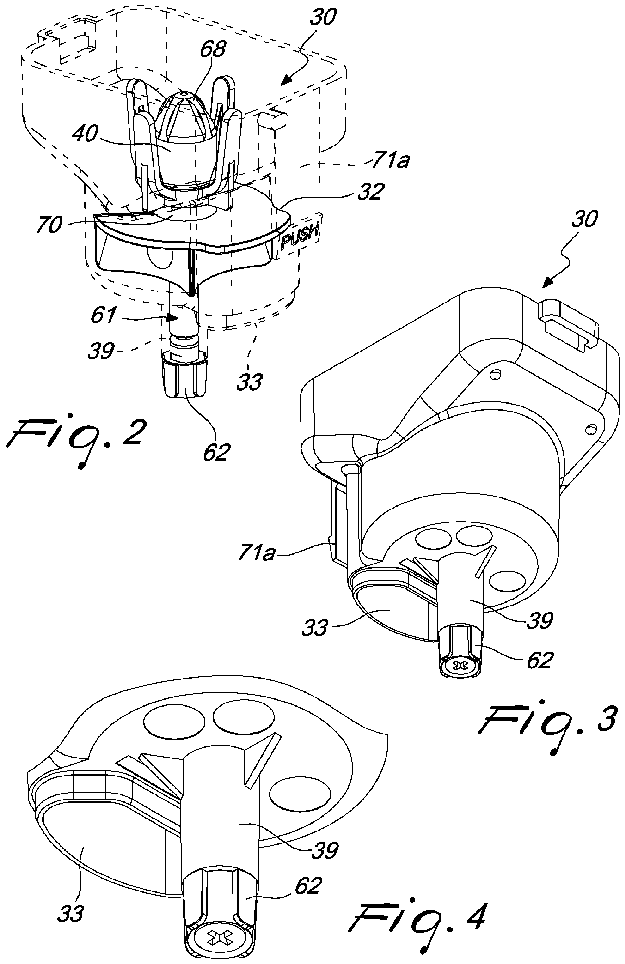

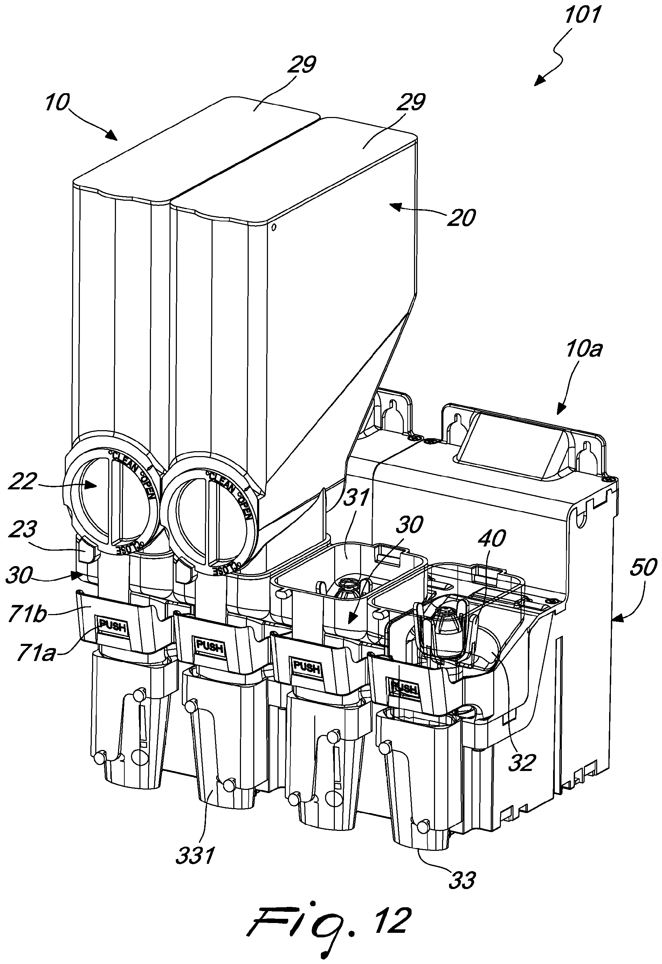

It is to be noted that in the preferred and illustrated embodiments (see in particular Figures 1, 2, 5 and 12), the dispenser body 30 has, in the upper portion, an opening that is complementary to the lower portion of the container 20, so that the container 20 can be mechanically coupled to the dispenser body 30.

The dispenser 10 further comprises an agitator element 40 which is positioned inside the upper chamber 31a of the dispenser body and adjacent to the separator element 32.

The dispenser can be constituted by any known element which is adapted to move the content of the upper chamber 31a, and is preferably constituted by a rotating element, such as for example a screw feeder, a gearwheel or the like.

In the preferred and illustrated embodiments, the agitator element is constituted by a screw feeder with a vertical rotation axis and comprising a plurality of vanes 40a, 40b, 40c, 40d that are curved upward and which in the distal portion are almost parallel to the rotation axis of the screw feeder.

The agitator element 40 is configured to move the products by contributing to the passage of these from the upper chamber 31a to the lower chamber 31b through an opening 34 of the separator element 32, i.e. through its movement (for example its rotation), it moves and mixes the products contained in the upper chamber 31a, thus favoring the outflow thereof through the opening 34 and, at the same time, breaking up any agglomerations, and facilitating the passage of product from the container 20 to the upper chamber 31a through the window 21.

The dispenser 10 also comprises a motor device 51 which transmits the motion to the agitator element 40 by way of a transmission system 60.

The motor device 51 is constituted by one or more conventional motors or actuators.

In the preferred and illustrated embodiments, the motor device 51 is constituted by an electric motor 512 which turns a gearwheel 513.

The transmission system 60 is also constituted by any transmission system that is known in the prior art and preferably by one or more shafts which connect the motor system 51 with the agitator element 40.

In the preferred and illustrated embodiments, the transmission system comprises a shaft 61 to one end of which the agitator element 40 is coupled.

In other embodiments, the transmission system comprises a system of belts and pulleys.

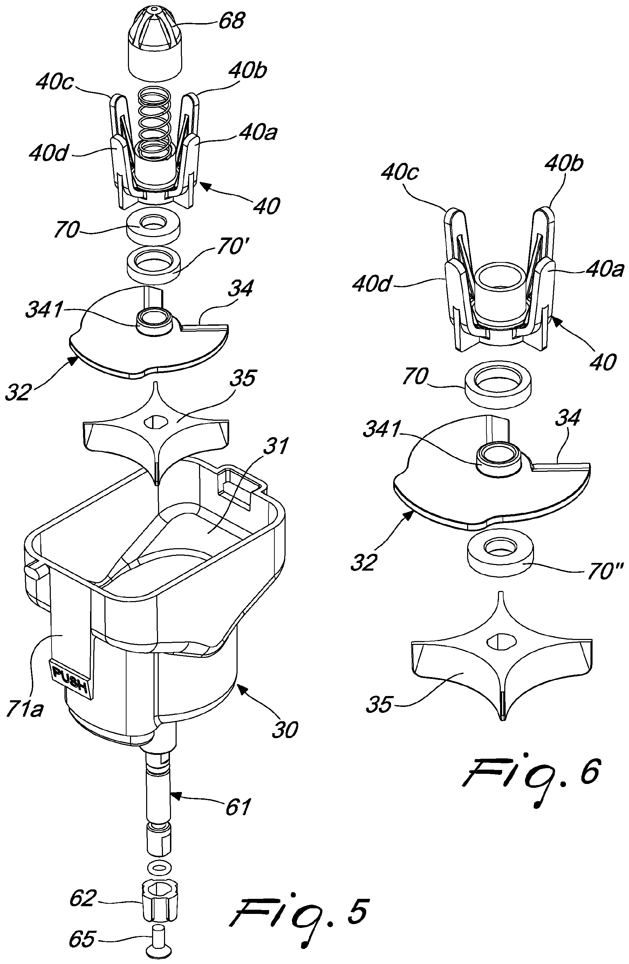

Returning to the example illustrated (Figures 1 and 5), the agitator element 40 is fixed by a locking element 68, such as for example a bushing or a cap, which is arranged upstream of the agitator element 40. Between the locking element 68 and the agitator element 40 an elastic element 64 is preferably interposed, such as for example a spring, which in essence pushes the agitator element 40 against the separator element 32.

According to an optional and advantageous characteristic, the transmission system 60 and the motor device 51 are connected by way of a quick coupling system that comprises, preferably, a pinion 62 which is integral with the shaft 61 and an engagement slot 63 which is complementary to such pinion 62 and is integral with the motor device 51. In other embodiments, not shown, it is the engagement slot 63 that is integral with the shaft 61, while the pinion 62 is integral with the motor device 51.

In more detail, in the preferred and illustrated embodiments, at the end of the shaft 61 opposite the end where the agitator element is coupled, a pinion 62 is coupled, preferably by way of a screw 65 or the like.

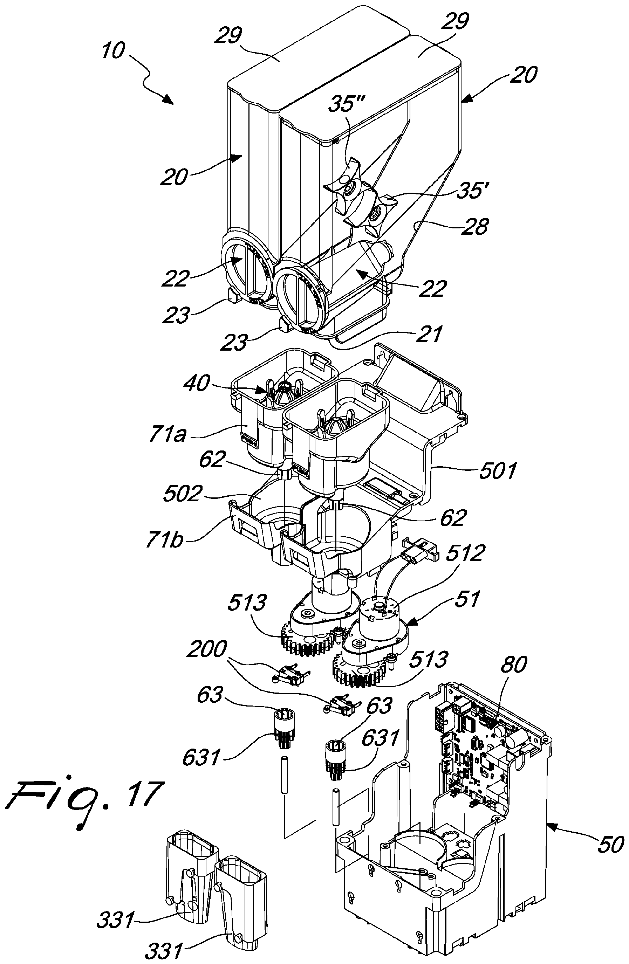

Also in these embodiments, with particular reference to Figure 17, there is a gear 631 which is connected with the gearwheel 513 and coupled to the engagement slot 63. In practice, inserting the pinion 62 into the engagement slot 63 provides the connection between the shaft 61 and the motor device 51.

As mentioned, the pinion 62 and engagement slot 63 coupling effectively form a rapid coupling system, in that it is possible to connect and disconnect the shaft 61 to/from the motor device 51 respectively by inserting and disengaging the pinion 62 into/from the engagement slot 63.

Preferably, the motor device 51 and the engagement slot 63 are accommodated in a base body 50 which is positioned below the dispenser body 30 and which comprises a cover 501 which in turn comprises a seat 502 which is adapted to receive the dispenser body 30.

In practice, in the preferred and illustrated embodiments, the dispenser comprises a base body 50, which acts as the base of the dispenser 10, on which is coupled the dispenser body 30, on which, in turn, the container 20 is coupled.

Optionally, the dispenser comprises a system for quick engagement and release 71a, 71b between the base body 50 and the dispenser body 30 and/or between the dispenser body 30 and the container 20.

In the examples illustrated, the dispenser comprises a system for quick engagement and release 71a, 71b between the base body 50 and the dispenser body 30, which is constituted by a tab 71a, which is integral with the dispenser body 30, and a slot 71b which is integral with the base body 50 (more precisely, it is integral with the cover 501 of the base body 50).

According to the invention, the dispenser 10 comprises at least one spacer element 70, 70', 70" which is interposed between the agitator element 40 and the separator element 32. In this manner, between the agitator element 40 and the separator element 32 an adapted space is created which prevents the deterioration of the products which, in this manner, are not crushed and "ground up" by the agitator element 40.

In the preferred embodiments, the spacer element 70 is ring-shaped and the separator element 32 is provided with an annular shoulder 341 which is engaged by the spacer element 70.

Advantageously, the spacer element 70 is removable and also interchangeable with other spacers 70', 70" which have different shapes and/or dimensions. In this manner it is possible to configure the dispenser 10 for products with different characteristics.

According to the invention, different embodiments are possible and the transition from one configuration to another can take place simply by adding, removing or substituting one or more spacers 70, 70', 70".

Figure 1 shows a first possible embodiment in which a single spacer element 70 is present, positioned between the separator element 32 and the agitator element 40.

Figure 5 shows a second possible embodiment in which two spacer elements 70, 70' are present, positioned between the separator element 32 and the agitator element 40.

Figure 6 shows a third possible embodiment in which a first spacer element 70 is present, positioned between the separator element 32 and the agitator element 40, and a second spacer element 70" is present, positioned between the separator element and the dividing element 35, which will be described below.

According to requirements, other embodiments (not shown) are also possible: for example, by removing all the spacers 70, 70', 70" it is possible to pass to an embodiment without spacers 70.

Optionally, inside the lower chamber 31b of the dispenser body 30, therefore under the separator element 34, there is a dividing element 35 which defines one or more sectors in the lower chamber 31b.

Preferably, the dividing element 35 is also turned by the motor device through the transmission system 60.

In the embodiments illustrated, with particular reference to Figures 1 and 5, the dividing element 35, the separator element 32, the spacer element 70 and the agitator element 40 are mutually coaxial and each one is passed through by an axial hole through which the shaft 61 passes.

Furthermore the dispenser body 30 comprises a hollow tubular protrusion 39 which is also coaxial with such axial holes and which is also passed through by the shaft 61.

In practice the tubular protrusion 39 and the axial holes define a tunnel within which the shaft 61 rotates.

Advantageously, the dividing element 35 is also interchangeable with other dividing elements which have different shapes and/or dimensions. In this manner it is possible to size the lower chamber 31b so as to contain the proper quantity of products to be dispensed. Optionally, the dispenser 10 comprises a receptacle in which spare dividing elements 35', 35" (in addition to the elements 70 - 70' - 70") can be stowed.

Optionally, the container 20 comprises a closure element 22 for closing the window 21, which can be configured in at least one of the following three positions:
- a closed position, in which the closure element 22 closes the window 21 so as to allow the container 20 to be disconnected from the dispenser body 30, thus avoiding the outflow of the products contained in the container 20;
- an open position, in which the closure element 22 clears at least partly the window 21 and makes the container 20 integral with the dispenser body 30 by way of an engagement portion 23, so as to allow the disconnection of the container 20 and of the dispenser body 30 from the base body 50, thus avoiding the outflow of the products contained in the container 20;
- a release position, in which the closure element 22 can be extracted from the container 20.

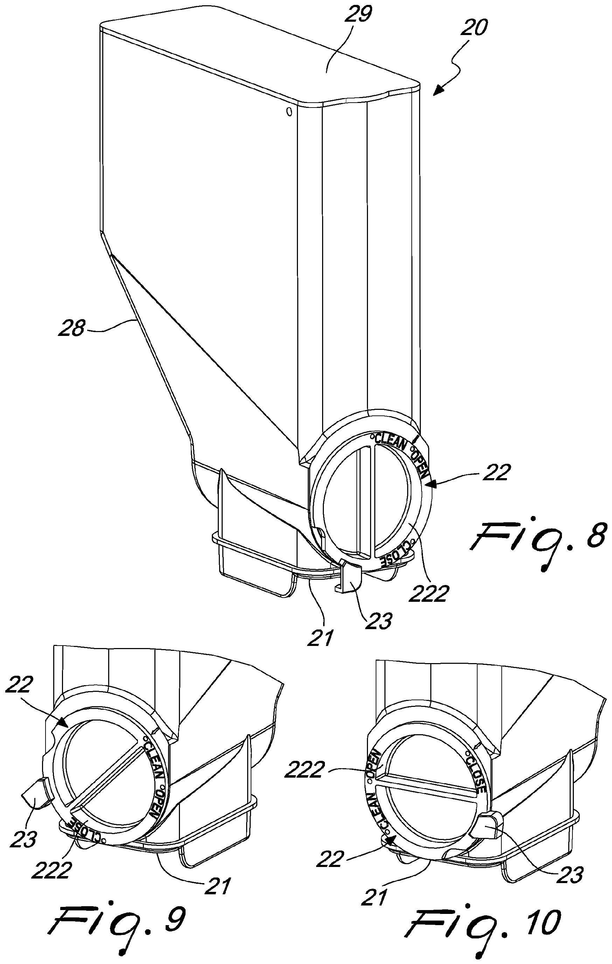

In the preferred illustrated embodiments, the closure element 22 can be configured in all of the above mentioned three positions (shown in Figures 8, 9 and 10), passing from one position to another by way of a rotation, and it is constituted by a rotating flow control element, which comprises a flat wall 221 which in the closed position closes the window 21, and by a knob 222, integral with the wall flat 221, which is adapted to be turned manually.

In other embodiments the closure element 22 can be configured by positions that can be selected by way of translation along its axis, and not rotations.

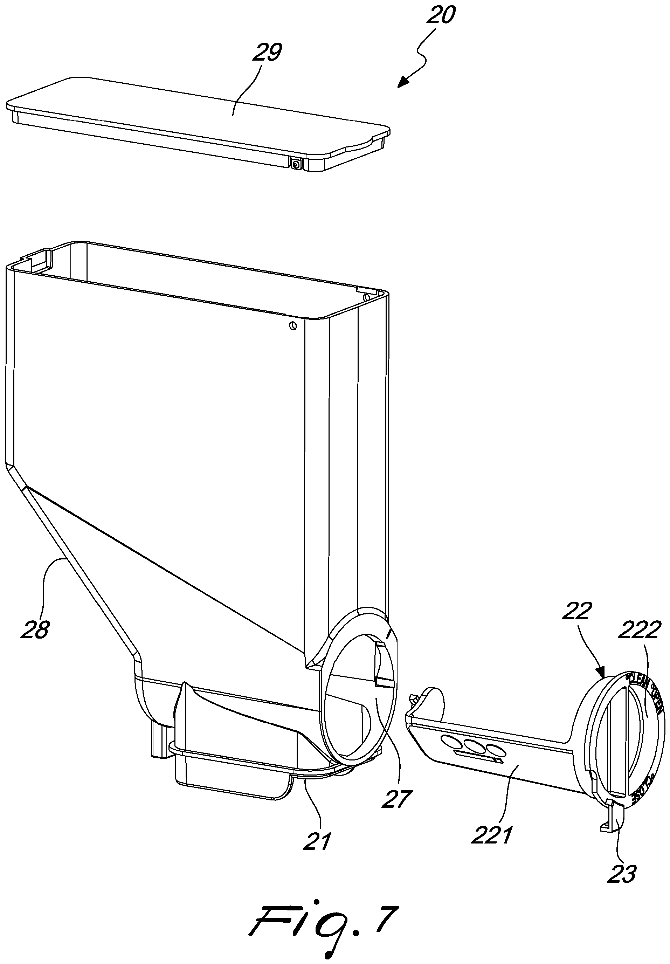

As shown in Figure 7, the closure element 22 is inserted into a circular mouth 27 from which, when in the release position, it can be extracted.

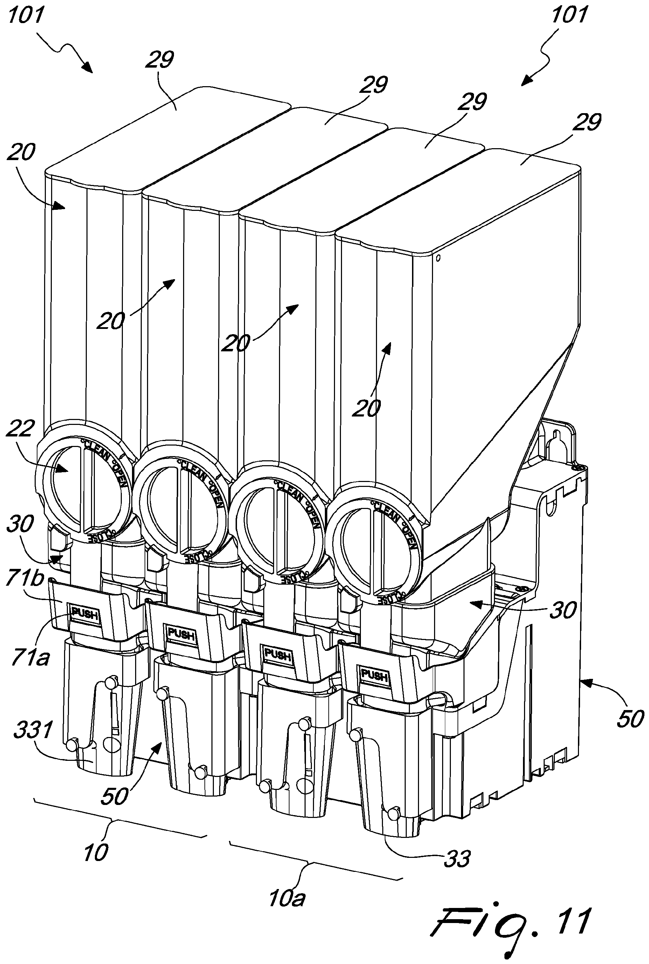

Also in this embodiment, the engagement portion 23 of the closure element 22 is constituted by a barb which, when the closure element is in the open position (for example Figures 8 and 11) hooks the dispenser body 30.

Preferably, the dispenser 10 according to the invention also comprises an electronic control system 80 which is configured to control at least the movement of the agitator element 40 and of the dividing element 35.

In practice, following a command received by the operator by way of an interface, the electronic control system 80 activates, by way of pulses or impacts, the motor device 51 which in turn actuates, by way of the transmission system 60, the agitator element 40 and the dividing element 35, thus causing the drop of the product into the lower chamber 31b and from the lower chamber 31b to the dispensing port 33.

Optionally, the electronic control system 80 is also configured to detect the presence of the container 20 by way of a sensor 81.

In practice, in a possible embodiment shown in Figure 16, the electronic system 80 is connected to a sensor 81, such as for example a proximity sensor, which detects the presence of a metallic element 82, integral with the container 20 and positioned so that, when the container 20 is coupled to the dispenser body 30, such metallic element 82 is proximate to the proximity sensor 81.

Optionally the electronic control system 80 is configured to detect the position of the shaft 60 by way of a detection means 200, such as a sensor or a micro-switch (Figures 16 and 17).

For the sake of simplicity, up to now a single dispenser has been described; however, according to the invention, the dispenser 10 can comprise a plurality of individual dispensers 10', 10" (each one comprising all or part of the characteristic described up to now) connected to each other and having, preferably, the base body 50 and the electronic control system 80 in common.

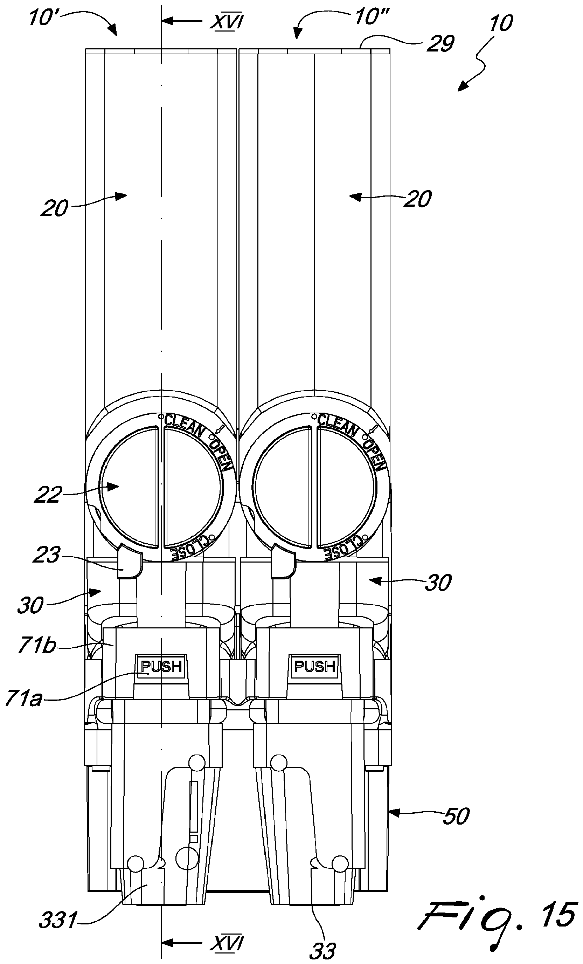

In the preferred embodiment (Figures 15 and 17), the dispenser 10 comprises two dispensers 10' 10' which have the base body 50 and the electronic control system 80 in common.

Also in the preferred embodiment, the dispenser 10 is configured to be connected to at least another dispenser 10a so as to form an expandable modular system 101 for dispensing food products.

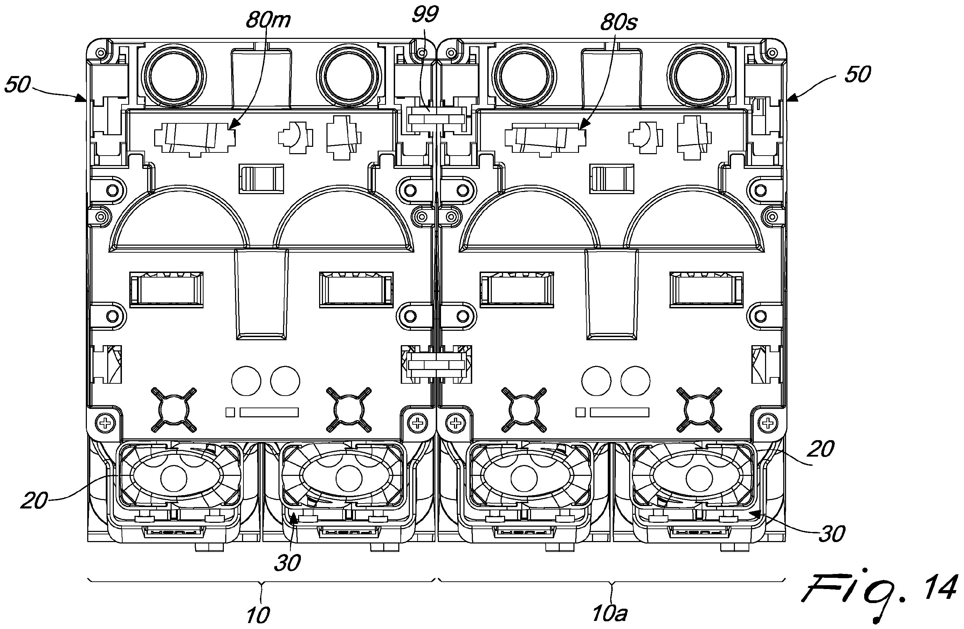

In practice, in this embodiment, each dispenser 10, 10a comprises mechanical coupling means 99 for coupling to another dispenser, furthermore (see Figure 14) at least one first dispenser 10 comprises a main electronic control system 80m (master) and at least another dispenser 10a, which is coupled to the first dispenser 10, is controlled electronically by such main electronic control system 80m, comprising a secondary electronic system 80s (slave) which is connected to the main electronic control system 80m (master) and controlled by it.

By virtue of these characteristics, it is possible to provide a modular system 101 which comprises a main dispenser 10 which can be connected to a variable number of secondary dispensers 10b, all controlled by the main electronic control system 80m of said main dispenser. In this manner it is possible to vary the number of dispensers 10, 10a according to changing requirements.

Furthermore, according to the invention, it is possible to configure the dispenser 10, or the expandable dispensing modular system 101, to be integrated in a vending machine for foods, such as for example a vending machine for beverages. In practice, apart from adapting the shapes of the base body 50, of the dispenser body 30 and of the container 20 to the characteristics of the vending machine, it will be sufficient to connect the electronic control system 80, 80m, 80s to the electronics of the vending machine, or integrate the two electronic systems.

In this manner it is possible to provide vending machines for foods which comprise one or more dispensers 10, 10a according to the present invention.

Operation of the dispenser 10, 10a according to the invention is briefly described below.

Following a command sent by an operator by way of an interface, or by the electronics of the vending machine in which the dispenser 10 is integrated, the electronic control system 80, 80m activates the motor device 51 which in turn actuates, by way of the transmission system 60, the agitator element 40 and the dividing element 35, thus causing the drop of the product into the lower chamber 31b. The product then passes from the lower chamber 31b to the dispensing port 33 and from there, by way of the dispensing spout 331, to the beverage (or the food) to be garnished with topping.

If the dispenser 10, 10a is integrated in a vending machine for beverages, this process is activated only when the user selects the option to garnish the beverage purchased with the topping contained in the dispenser 10, 10a, or where the recipe for the beverage entails the presence of the topping.

The vending machine, after having dispensed the selected beverage, goes to standby mode until the dispenser 10, 10a dispenses the chosen product, with the method described above.

Once the product has been prepared the user can retrieve the beverage.

To load the dispenser, it is sufficient to open the lid 29, insert the product into the container 20 and close the lid 29 again.

Depending on the product it is possible to configure the dispenser 10 by changing the spacer element 70 and/or the separator element 35.

To carry out the cleaning operation, it is possible to extract the container 20 by proceeding as follows:
- positioning the closure element 22 in the open position (Figure 8);
- opening the quick engagement and release system 71a, 71b by pressing the tab 71a and making it exit from the slot 70b, and slide out the container 20 and the dispenser body 30, which are mutually integral by virtue of the engagement portion 23, from the base body 50;
- opening the lid 29 and empty out any remaining product;
- positioning the closure element 22 in the closed position (Figure 10) and removing the container 20 from the dispenser body 30;
- rotating the closure element 22 up until the release position (Figure 9) and extracting the closure element 22 (Figure 7).

In addition it is possible to remove all of the components of the dispenser body 30 (i.e. the dividing element 35, the separator element 32, the spacer element 70, the agitator element 40 and the elastic element 64), for cleaning or to change the configuration, as follows:
- opening the quick engagement and release system 71a, 71b by pressing the tab 71a and making it exit from the slot 70b, and allowing the dispenser body 30 to slide out from the base body 50;
- unscrewing the locking element 68 and allowing the components to slide out (i.e. the dividing element 35, the separator element 32, the spacer element 70, the agitator element 40 and the elastic element 64).

If only the body 30 needs to be cleaned, it is not necessary to empty the container 20, since when the closure element 22 is moved to the closed position, the window 21 will also be fully closed.

It is therefore possible, as first step, to remove the container 20 from the base 50, and subsequently remove the dispenser body 30 from the base 50 by way of the quick release means 71a and 71b.

In practice it has been found that the dispenser of food product, according to the present invention, achieves the intended aim and objects by avoiding to damage the products during the dispensing operation.

Another advantage of the dispenser according to the invention consists in that it is highly versatile and adapted to dispense different types of product.

Another advantage of the dispenser, according to the invention, consists in that it is capable of forming a modular system that can dispense a variable number of products.

Another advantage of the dispenser, according to the invention, consists in that it is easy to clean and maintain.

Another advantage of the dispenser, according to the invention, consists in that it is easy to implement and economically competitive when compared to the prior art.

The dispenser thus conceived is susceptible of numerous modifications and variations all of which are within the scope of the appended claims.

Moreover, all the details may be substituted by other, technically equivalent elements.

In practice the materials employed, provided they are compatible with the specific use, and the contingent dimensions and shapes, may be any according to requirements and to the state of the art.

In conclusion, the scope of protection of the claims shall not be limited by the explanations or by the preferred embodiments illustrated in the description by way of examples, but rather the claims shall comprise all the patentable characteristics of novelty that reside in the present invention, including all the characteristics that would be considered as equivalent by the person skilled in the art.

The disclosures in Italian Patent Application No. 102017000116736 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An automatic dispenser of food products (10), particularly for dispensing food toppings, which comprises:
- a container (20) adapted to contain a reserve of products;
- a dispenser body (30), connected to said container (20), which comprises a cavity (31), a separator element (32) which divides said cavity (31) into an upper chamber (31a) and a lower chamber (31b), and a dispensing port (33) for the outflow of the products from said lower chamber (31b); said upper chamber (31a) being connected to the container (20) by way of at least one window (21) for the passage of the products;
- a dividing element (35), which defines one or more sectors in said lower chamber (31b);
- an agitator element (40), which is arranged inside said upper chamber (31a) and is adjacent to said separator element (32) and is configured to move the products, contributing to the transition of the products from the upper chamber (31a) to the lower chamber (31b) through an opening (34) of the separator element (32) and of the dividing element (35);
- a motor device (51) which transmits motion to the agitator element (40) and to the dividing element (35) by way of a transmission system (60);
**characterized in that** it comprises at least one spacer element (70) interposed between said agitator element (40) and said separator element (32) and/or between said separator element (32) and said dividing element (35).

2. The dispenser (10) according to claim 1, **characterized in that** said transmission system (60) and said motor device (51) are connected by way of a quick coupling system.

3. The dispenser (10) according to claim 2, **characterized in that** said transmission system (60) comprises a shaft (61) and said quick coupling system comprises a pinion (62) and an engagement slot (63) which is complementary to said pinion (62); said pinion (62) being integral with said shaft (61) and said engagement slot (63) being integral with said motor device (51) or vice versa.

4. The dispenser (10) according to one or more of the preceding claims, **characterized in that** said container (20) comprises a closure element (22) for closing said window (21), which can be configured in one or more of the following three positions:
- a closed position, in which said closure element (22) closes said window (21) so as to allow the container (20) to be disconnected from the dispenser body (30), while avoiding the outflow of the products contained in the container (20);
- an open position, in which said closure element (22) clears at least partly said window (21) and renders the container (20) integral with the dispenser body (30) by way of an engagement portion (23), so as to allow the disconnection of the container (20) and of the dispenser body (30) from the base body (50), while avoiding the outflow of the products contained in the container (20);
- a release position, in which said closure element (22) can be extracted from the container (20).

5. The dispenser (10) according to one or more of the preceding claims, **characterized in that** said at least one spacer element (70) is removable and interchangeable with other spacer elements (70', 70") which have different shapes and/or dimensions.

6. The dispenser (10) according to one or more of the preceding claims, **characterized in that** said dividing element (35) is interchangeable with other dividing elements (35', 35") which have different shapes and/or dimensions.

7. The dispenser (10) according to one or more of the preceding claims, **characterized in that** said motor device (51) is accommodated in a base body (50) and **in that** it comprises a system for quick engagement and release (71a, 71b) between said base body (50) and the dispenser body (30) and/or between the dispenser body (30) and the container (20).

8. The dispenser (10) according to one or more of the preceding claims, **characterized in that** it comprises an electronic control system (80, 80m, 80s) which is configured to control at least the movement of the agitator element (40) and of the dividing element (35).

9. The dispenser according to the preceding claim, **characterized in that** said electronic control system (80, 80m, 80s) is also configured to detect the presence of the container (20) by way of a sensor (81) and/or to detect the position of the shaft (60) by way of a detection means (200).

10. The dispenser (10) according to one or more of the preceding claims, **characterized in that** it is configured to be connected to at least one other dispenser (10a) according to one or more of the preceding claims, so as to form an expandable modular system (101) for dispensing food products.

11. An expandable dispensing modular system (101), which comprises a plurality of mutually connected dispensers (10, 10a), according to claim 10, **characterized in that** at least one of said dispensers (10) comprises a main electronic control system (80m) and at least one other said dispenser (10a) is controlled electronically by said main electronic control system (80m).

12. A vending machine for food or beverages, **characterized in that** it comprises one or more food topping dispensers (10, 10a, 10b, 10c) according to one or more of claims 1 to 10 or a system (101) according to claim 11.
